# NEUE EUROPÄISCHE PATENTSCHRIFT

(11) **EP 2 828 131 B2**
(45) Veröffentlichungstag und Bekanntmachung des Hinweises auf die Entscheidung über den Einspruch: **15.02.2023**
(45) Hinweis auf die Patenterteilung: 16.12.2020
(21) Anmeldenummer: 13709114.6
(22) Anmeldetag: 14.03.2013
(51) Int. Cl.: B60T 7/04, B60T 7/08

(54) **FREMDKRAFTBREMSANLAGE**
POWER-BRAKE SYSTEM
SYSTÈME DE FREINAGE ASSISTÉ

(30) Priorität: 19.03.2012 DE 102012204263
(43) Veröffentlichungstag der Anmeldung: 28.01.2015
(73) Patentinhaber: Continental Automotive Technologies GmbH, 30165 Hannover (DE)
(72) Erfinder: LINHOFF, Paul, 61267 Neu-Anspach (DE)
(74) Vertreter: Schlosser, Martin
(86) Internationale Anmeldenummer: PCT/EP2013/055191
(87) Internationale Veröffentlichungsnummer: WO 2013/139669

(56) Entgegenhaltungen:
- EP-A2- 0 978 435
- WO-A1-01/62569
- WO-A1-2006/000259
- WO-A1-2006/111392
- WO-A1-2012/028521
- DE-A1- 19 717 686
- DE-A1-102007 035 326
- DE-A1-102009 046 238

## Beschreibung

Die Erfindung betrifft eine Fremdkraftbremsanlage gemäß dem Oberbegriff von Anspruch 1.

Die Entwicklung von Fremdkraftbremsanlagen ermöglicht es, eine für den Fahrer sichere und komfortable Handhabung der Bremsanlage anzubieten. Der Fahrer baut bei diesen Bremssystemen nicht unmittelbar den Druck in den Bremskreisen bzw. Radbremsen durch seine Muskelkraft auf. Stattdessen wird gewöhnlich sein Bremswunsch in eine Simulatoreinheit mit Bremspedal eingeleitet und dieser Wunsch entsprechend sensorisch erfasst. In einer elektronischen Steuer- und Regeleinheit wird daraus ein Sollbremsmoment errechnet, wobei dann die Steuer- und Regeleinheit die Stelleinheit anhand von zu dem Sollbremsmoment korrespondierenden Stellgrößen zum Aufbau von Bremsdruck ansteuert. Die Stelleinheit umfasst dabei beispielsweise einen Elektromotor, der einen Tandemhauptbremszylinder betätigt, an dessen Kammern die Bremskreise hydraulisch angeschlossen sind.

Aus der DE 197 17 686 A1 ist eine Schaltungsanordnung für ein Kraftfahrzeug-Regelungssystem wie z.B. eine Kraftfahrzeug-Bremsanlage bekannt, welche aus zwei Kreisen besteht, wobei jeder Kreis ein Mikroprozessorsystem, eine Eingangsdaten-Erfassungseinrichtung und eine Aktuatorbetätigung umfasst, wobei der Eingangsdaten-Erfassungseinrichtung Radsensordaten und ein Bremspedal-Betätigungsdaten zugeführt werden. Die Datenwege von den Mikroprozessorsystemen zu den zugehörigen Aktuatorbetätigungen führen jeweils über einen Umschalter, so dass bei Auftreten eines Fehlers in einem der Mikroprozessorsysteme durch Umlegen des Umschalters die Ansteuerung des Aktuators des defekten Kreises von dem intakten Kreis übernommen werden kann.

Bekannte Lösungen von hydraulischen Fremdkraftbremsanlagen mit zentraler Steuerung verfügen über eine Energieversorgung, eine (sichere) zentrale elektronische Steuerung und einen Antrieb, der für den Bremsdruckaufbau zuständig ist. Einige Ausführungen derartiger Bremsanlagen verfügen über einen hydraulischen Energiespeicher (Hochdruckspeicher). Derartige Konstruktionsweisen haben sich allerdings als energetisch ineffizient erweisen, so dass bevorzugt so genannte Power on Demand Funktionalitäten verwendet werden. Dabei muss die Abhängigkeit der entsprechenden Komponenten von der elektrischen Energieversorgung bzw. dem Bordnetz in Kauf genommen werden.

Um die ECE 13 Anforderungen zu erfüllen, müssen derartige Bremsanlagen eine hydraulisch-mechanische Rückfallebene aufweisen, in der der Fahrer bei Ausfall der Primärfunktionen der Bremsanlage durch Muskelkraft das Fahrzeug mit einer Verzögerung von wenigstens 0,3 g abbremsen kann. Nachteilig dabei wirkt sich allerdings aus, dass die Wirksamkeit dieser Rückfallebene für den Fahrzeugbenutzer in besonderen Fällen nur bedingt gegeben ist. Der Fahrer nimmt oftmals bei Einsetzen der Rückfallebene einen Totalausfall der Bremsen war, da sich das Pedalgefühl und der zum Bremsen notwendige Kraftaufwand sowie die maximale Verzögerung deutlich von denen im Normalbetrieb der Bremsanlage unterscheiden. Es besteht also gewöhnlich eine sehr große Differenz zwischen Vollfunktion und Rückfallebene der Bremsanlage in Bezug auf Bremspedalkraft/-weg und Verzögerung. Dazu kommt eine relativ große Wahrscheinlichkeit der Aktivierung der Rückfallebene während des normalen Fahrzeugbetriebes bedingt durch die erforderlichen elektrisch/ elektronischen Komponenten, insbesondere im Vergleich zu Anlagen mit Normalbremsfunktion die auf rein hydraulisch/ mechanischen Komponenten basieren wie z. B. Anlagen mit Vakuumverstärker. Für den Fahrer, der sich an die Normalfunktion der Bremsanlage gewöhnt hat und entsprechende Automatismen entwickelt hat, besteht die Gefahr, dass er sich in einer Ausfallsituation der Normalfunktion der Bremsanlage nicht schnell genug adaptieren kann, so dass eine extreme Gefährdungssituation für den Fahrer und seine Umgebung auftreten kann.

Der Erfindung liegt daher die Aufgabe zugrunde, eine Bremsanlage der oben genannten Art bereitzustellen, bei der durch eine zwischengeschaltete Rückfallebene die Notwendigkeit der Aktivierung der mechanisch-hydraulischen Rückfallebene beim Auftreten von Fehler deutlich reduziert wird. Beziehungsweise je nach Konfiguration vollständig entfallen könnte. Diese Aufgabe wird erfindungsgemäß gelöst durch eine Fremdkraftbremsanlage gemäß Anspruch 1.

Vorteilhafte Ausgestaltungen der Erfindung sind Gegenstand der Unteransprüche.

Die Erfindung geht von der Überlegung aus, dass bei herkömmlichen Fremdbremsanlagen der große Unterschied zwischen der Normalbetriebsart und der hydraulischen Rückfallebene dazu führen kann, dass der Fahrer aufhört, fest auf das Bremspedal zu treten, so dass der Bremsweg in einer derartigen Situation deutlich zu lang wird und dadurch starkes Gefährdungspotential vorhanden ist. Aus diesem Grunde sollte auf das Aktivieren dieser Rückfallebene möglichst verzichtet werden, wenn auf andere Art und Weise ein auftretender Fehler behandelt bzw. abgefangen werden könnte.

Wie nunmehr erkannt wurde, lässt sich dieses Ziel realisieren durch Schaltung einer Zwischenebene bzw. zusätzlichen Rückfallebene, in der das Auftreten lokalisierter Fehler behandelt werden kann, ohne dass auf die mechanisch-hydraulische Rückfallebene zurückgegriffen werden muss. Diese Zusatzebene sollte dazu möglichst einen ähnlichen Funktionsumfang aufweisen wie die Normalebene bzw. Normalbetriebsart und soweit wie möglich auch auf die entsprechenden Komponenten zurückgreifen können. Insbesondere sollten Fehler oder ein Ausfall der elektronischen Steuer- und Regeleinheit (ECU) abgefangen werden.

Eine derartige Zwischenebene wird realisiert durch das Vorsehen von zwei unabhängigen Steuer- und Regeleinheiten, welche jeweils signaleingangsseitig mit wenigstens einem Sensor zur Fahrerbremswunscherfassung verbunden sind, wobei im Falle eines Fehlers der bereits vorhandenen Steuer- und Regeleinheit die Ansteuerung der Stelleinheit von der jeweils anderen Steuer- und Regeleinheit vorgenommen werden kann. Diese sollte als Minimalfunktion zumindest die Grundfunktion der normalen Bremsfunktion (ohne Schlupfregelungen, ABS etc.) ausfüllen.

Es ist eine Stelleinheit vorgesehen, die einen Elektromotor umfasst und einen Aktuator.

Der Aktuator umfasst bevorzugt ein Getriebe und eine Spindeleinheit, welche eine rotatorische Bewegung der Motorachse in eine translatorische Bewegung eines Primärkolbens eines Tandemhauptbremszylinder (THZ) übersetzt, wobei der Tandemhauptbremszylinder zwei Kammern aufweist, und wobei jede Kammer hydraulisch mit einem Bremskreis mit zwei Radbremsen verbunden ist.

Dabei ist der Elektromotor, insbesondere ein elektronisch kommutierender BLDC- (bürstenloser Gleichstrom-)Motor, zweiteilig mit zwei Komponenten ausgeführt, wobei jede der beiden Komponenten jeweils von einer der Steuer- und Regeleinheiten angesteuert wird.

Dabei umfasst jeder der beiden Teile vorzugsweise einen entsprechenden Dreiersatz von Spulen des Stators. Werden beide Spulensätze von beiden Steuer- und Regeleinheiten angesteuert, liefert der Motor die volle Leistung. In der zwischengeschalteten Rückfallebene, bei der nur eine der beiden Steuer- und Regeleinheiten bzw. -teile die entsprechenden Spulen ansteuert, ist die Leistung des Motors dann zwar reduziert, es kann aber trotzdem noch der Fremdkraftbetrieb genutzt werden, um das Fahrzeug abzubremsen und zum Stillstand zu bringen.

Vorteilhafterweise weist die jeweilige Steuer- und Regeleinheit eine separate und von der Energieversorgung der jeweils anderen Steuer- und Regeleinheiten unabhängige Energieversorgung auf. Auf diese Weise können in der nunmehr vorgesehenen Rückfallebene nicht nur Störungen oder Ausfälle der Funktionsfähigkeit der jeweiligen Steuer- und Regeleinheit kompensiert werden, sondern auch ein Totalausfall aufgrund des Ausfalles der Stromversorgung. Solange die andere Steuer- und Regeleinheit noch mit Energie versorgt werden kann, kann diese noch die Ansteuerung der Stelleinheit übernehmen. Auf diese Weise ist zwar, abhängig von der Auslegung der weiteren Steuer- und Regeleinheit, gegebenenfalls die Funktionsvielfalt limitiert (z. B. können keine Schlupfregelungen mehr stattfinden), die Grundfunktionen der fremdkraftgesteuerten Bremsanlage sind aber noch abrufbar. Zudem erfährt der Fahrer nicht plötzlich einen stark abweichenden Zusammenhang von Pedalweg und Verzögerungsmoment, wie dies gewöhnlich bei Umschaltung auf die mechanisch-hydraulische Rückfallebene der Fall ist.

Vorteilhafterweise sind zu einer vorgegebenen Sicherheitsanforderung, insbesondere ASIL D, die primäre und die wenigstens eine sekundäre Steuer- und Regeleinheit derart konfiguriert, dass sie zusammen die vorgegebene Sicher-heitsanforderung erfüllen, wobei jeder der Steuer- und Regeleinheiten für sich genommen einer niedrigen Sicherheitsanforderung, insbesondere ASIL B, genügt. Somit müssen nicht zwei gleichartig konfigurierte Steuer- und Regeleinheiten eingesetzt werden, sondern sie können hinsichtlich Funktionsumfang und Bauraum, Stromverbrauch und Kosten gegenüber einer vollwertigen Steuer- und Regeleinheit reduziert werden. Die primäre und sekundäre Steuer- und Regeleinheit können in einem gemeinsamen Gehäuse untergebracht sein oder auch in getrennten Baugruppen realisiert werden. In diesem Zusammenhang bedeuten die Bezeichnungen "primär" und "sekundär" nicht notwendigerweise, dass eine der Steuer- und Regeleinheiten einen größeren Funktionsumfang als die andere haben muss. Es können auch alle notwendigen Steuer- und Regelfunktionen im Wesentlichen auf beide Steuer- und Regeleinheiten aufgeteilt werden. Alternativ dazu ist z. B. die sekundäre nur mit den Grundfunktionen ausgestattet, während die andere (primäre) die Regelfunktionalität (ABS, ASR etc.) aufweist.

Zur Fahrerbremswunscherfassung ist vorteilhafterweise ein redundant ausgeführter Wegsensor vorgesehen. Alternativ oder in Kombination dazu ist zur Fahrerbremswunscherfassung vorteilhafterweise ein redundant ausgeführter Drucksensor vorgesehen.

Die Fahrerbremswunscherfassung wird zudem vorteilhafterweise mit Hilfe einer Betätigungseinheit durchgeführt, die ein Bremspedal und einen Simulator umfasst. Durch einen Wegsensor kann der von dem Bremspedal zurückgelegte Weg sensiert werden. Ein Drucksensor eignet sich für hydraulische Simulatoren, in denen der Fahrer bei Betätigung des Bremspedals über einen Kolben Druckmittel in einem Zylinder verschiebt. Die Vorteile der Erfindung bestehen insbesondere darin, dass durch das Vorsehen einer zwischengeschalteten Rückfallebene mit einer zusätzlichen Steuer- und Regeleinheit die Zuverlässigkeit der Bremsanlage bzw. die Beherrschbarkeit des Fahrzeuges bei möglichen Fehlern verbessert wird. Durch die redundante Ausführung der für die Normalbetriebsart der Fremdkraftbremsanlage entscheidenden Komponenten kann in den entscheidenden Fällen von auftretenden Fehlern eine hinreichende Performance der ersten Rückfallebene der Bremsanlage gewährleistet werden.

So kann durch eine weitere bzw. zusätzliche Steuer- und Regeleinheit, die bedarfsweise die Stelleinheit ansteuern kann, noch durch Fremdbremskraft gebremst werden, selbst wenn die primäre Steuer- und Regeleinheit ausgefallen ist. Wenn auch eine zusätzliche Stelleinheit vorgesehen ist, können auch Fehlfunktionen oder Ausfälle in einer der Stelleinheiten abgefangen werden und die mechanisch-hydraulische Rückfallebene muss nicht aktiviert werden. Die Wahrscheinlichkeit dafür, dass auf die mechanisch-hydraulische Rückfallebene zurückgegriffen werden muss, wird also gegenüber herkömmlichen Bremsanlagen deutlich reduziert.

Ein Ausführungsbeispiel der Erfindung wird anhand einer Zeichnung näher erläutert. Darin zeigen in stark schematisierter Darstellung:
- FIG. 1: eine Fremdkraftbremsanlage nach dem Stand der Technik mit einer Bremsbetätigungseinheit, einer zentralen elektronischen Steuer- und Regeleinheit und einer Stelleinheit sowie zwei Bremskreisen, an die jeweils zwei Radbremsen hydraulisch angeschlossen sind,
- FIG. 2: eine Fremdbremskraftanlage in einer ersten bevorzugten Ausführungsform, mit einer primären und einer sekundären Steuer- und Regeleinheit,
- FIG. 3: die Fremdkraftbremsanlage aus FIG. 2 in einer bevorzugten Weiterbildung, wobei jede der beiden Steuer- und Regeleinheiten eine eigene Energieversorgung aufweist, und
- FIG. 4: eine nicht erfindungsgemäße Fremdbremskraftanlage mit einer zusätzlichen Stelleinheit.

Gleiche Teile sind in allen Figuren mit denselben Bezugszeichen versehen.

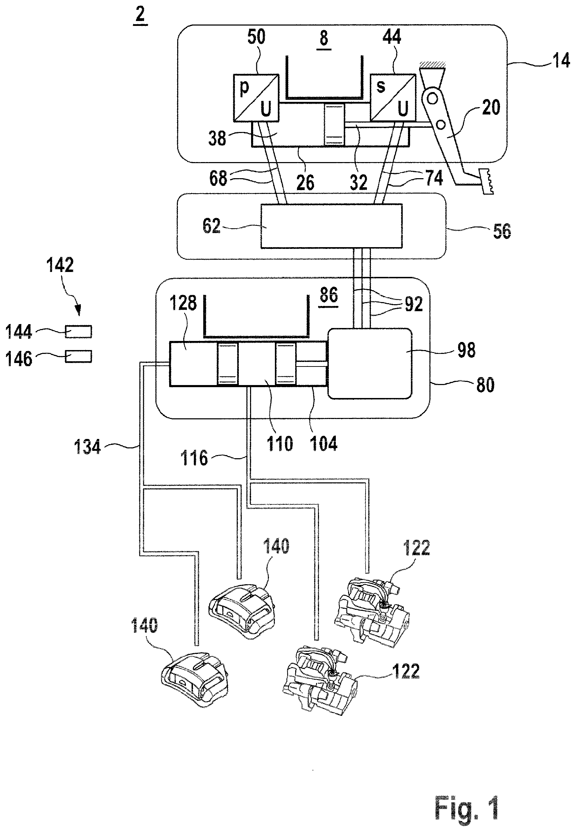

Die Fremdkraftbremsanlage 2 aus FIG. 1 gemäß dem Stand der Technik umfasst eine Betätigungseinheit 8, deren Komponenten in dem Kasten 14 dargestellt sind. Die Betätigungseinheit 8 weist ein Bremspedal 20 auf, welches bei Betätigung in einem Simulator 26 einen Simulatorkolben 32 in einen mit Druckmittel geführten Druckraum 38 verschiebt. Die Betätigungseinheit umfasst einen redundant ausgeführten Wegsensor 44, der beispielsweise den von dem Pedal bzw. dem Simulatorkolben 32 zurückgelegten Weg misst und einen redundant ausgeführten Drucksensor 50. Anstelle eines Wegsensors 44 kann auch z. B. ein Winkelsensor oder Kraftsensor eingesetzt werden. Der Drucksensor 50 misst den in dem Druckraum 38 vorliegenden Druck. Die oben genannten Komponenten dienen der Signalerfassung für die Fahrerbremswunscherfassung und genügen in Summe der Sicherheitsanforderung ASIL D.

Die Fremdkraftbremsanlage 2 umfasst weiterhin eine in dem Kasten 56 dargestellte (zentrale) einzige elektronische Steuer- und Regeleinheit (ECU) 62, welche signaleingangsseitig über Signalleitungen 68 mit dem Drucksensor 50 und über Signalleitungen 74 mit dem Wegsensor 44 verbunden ist. Die Steuer- und Regeleinheit 62 umfasst einen Prozessor und eine Leistungselektronik für die Fahrerbremswunscherfassung und Regelung der zur Einstellung und Regelung des gewünschten Bremsdruckes nötigen Stellgrößen. Die Steuer- und Regeleinheit ist dazu derart konzipiert, dass sie den Sicherheitsanforderungen ASIL D genügt.

Die Steuer- und Regeleinheit 62 ist zur Einstellung der Stellgrößen signaleingangs- und signalausgangsseitig mit einer im Kasten 80 dargestellten Stelleinheit 86 über Signalleitungen 92 verbunden. Diese umfasst einen Elektromotor mit einer Motorachse (nicht dar-gestellt), ein Getriebe und eine Spindeleinheit (jeweils nicht dargestellt) und einen Tandemhauptbremszylinder 104. Dessen erste Kammer 110 ist mit einem ersten Bremskreis 116 hydraulisch verbunden, welcher zwei Hinterradbremsen 122 umfasst. Eine zweite Kammer 128 ist hydraulisch mit einem zweiten Bremskreis 134 verbunden, welcher zwei Vorderradbremsen 140 umfasst.

Die Signale der Sensoren 44, 50 werden im Betrieb der Bremsanlage bei Betätigung des Bremspedals 20 durch den Fahrer von der ECU verarbeitet, um den Fahrerbremswunsch zu bestimmen und daraus ein Sollbremsmoment auszurechnen, mit dessen Hilfe dann die Stellgrößen für die Stelleinheit 86 bestimmt werden und über die Signalleitungen 92 an die Stelleinheit 86 weitergegeben werden. Hier wie in den folgenden Figuren ist die Fremdkraftbremsanlage 2 hinsichtlich der Bremskreise 116, 134 schwarz-weiß ausgestaltet, wobei der sekundären bzw. Schwimm-Kammer 128 die Vorderradbremsen 140 zugeordnet sind. Alternativ können der Kammer 128 auch die Hinterradbremsen zugeordnet werden oder es kann eine diagonale Aufteilung erfolgen.

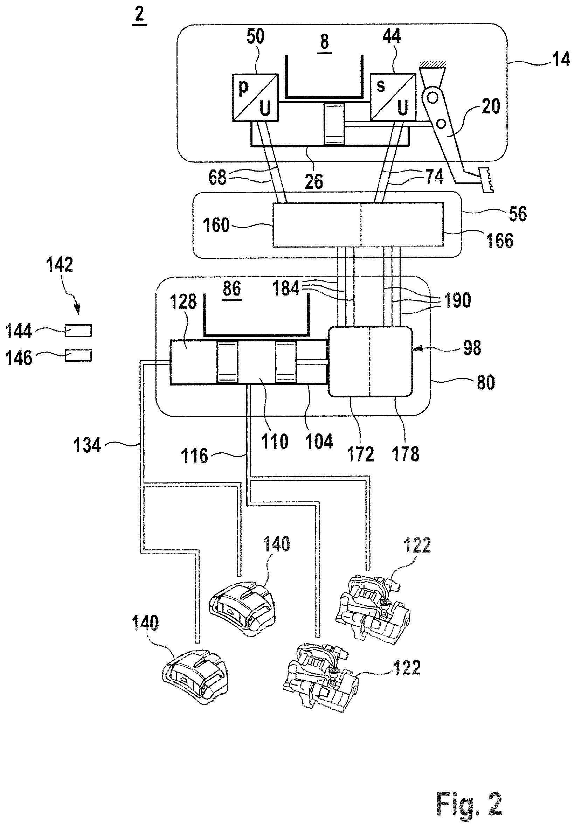

Ein erstes Ausführungsbeispiel einer erfindungsgemäßen Bremsanlage ist in FIG. 2 dargestellt. Im Gegensatz zur aus dem Stand der Technik bekannten Fremdkraftbremsanlage aus FIG. 1 sind zwei Steuer- und Regeleinheiten 160, 166, nämlich eine primäre Steuer- und Regeleinheit 160 (ECU) und eine sekundäre Steuer- und Regeleinheit 166 (ECU 2) vorgesehen, wobei jede der beiden Steuer- und Regeleinheiten 160, 166 jeweils einen Prozessor und eine Leistungselektronik zur Fahrerbremswunscherfassung umfasst. Die ECU ist über Signalleitungen 68 mit dem Drucksensor 50, die ECU 2 über Signalleitungen 74 mit dem Wegsensor 44 verbunden. Die Zuordnung kann auch umgekehrt gewählt werden, und beide Steuer- und Regeleinheiten 169, 166 können auch mit beiden Sensoren 44, 50 signaleingangsseitig verbunden sein. Es kann auch mehr als eine sekundäre Steuer- und Regeleinheit 166 vorgesehen sein, wobei dann jeweils die Summe aller ECUs eine vorgegebene Sicherheitsanforderung erfüllt.

Der Elektromotor 98 ist zweiteilig ausgeführt mit einem ersten Teil 172, welcher von der Steuer- und Regeleinheit 160 über Signalleitungen 184 ansteuerbar ist und einem zweiten Teil 178, welcher von der Steuer- und Regeleinheit 166 über Signalleitungen 190 ansteuerbar ist. Beide Teile des Motors bzw. Teilkomponenten 172, 178 betätigen über eine Getriebe/ Spindeleinheit (nicht dargestellt) den Tandemhauptbremszylinder 104 zum Aufbau von Bremsdruck in den Bremskreisen 116, 134. Während die Steuer- und Regeleinheit 160 den vollen Leitungsumfang an Steuer- und Regelungsvorgängen aufweist, kann die weitere Steuer- und Regeleinheit 166 nur Grundfunktionen erfüllen ohne Regelvorgänge wie Schlupfregelung. Im vorliegenden Ausführungsbeispiel ist der Elektromotor 98 als verdoppelter sternverschalteter Dreiphasen BLDC-Motor ausgebildet, wobei der Stator statt 3 spulen 6 Spulen umfasst, wobei jeweils drei der Spulen durch eine Steuer-und Regeleinheit 160, 166 angesteuert werden, wodurch sich eine besonders einfache und kostengünstige Verschaltung ergibt. Bei Ansteuerung aller 6 Spulen liefert der Elektromotor die volle Leistung.

Eine Stromversorgung 142 durch ein Bordnetz, gegebenenfalls auch mit einem Generator, ist schematisch eingezeichnet mit einem Pluspol 144 und elektrischer Erde (ground) 146.

Die Fremdkraftbremsanlage gemäß FIG. 2 realisiert durch die speziell ausgeführte redundante Ausführung der Steuer- und Regeleinheit 160, 166 und die zweiteilige Ausführung des Elektromotors 98 eine zwischengeschaltete Rückfallebene, in der die Fremdkraftfunktionalität zumindest noch in ihren Grundfunktionen erhalten ist. Bei einem Ausfall einer der Steuer- und Regeleinheiten 160, 166 kann die jeweils andere noch die Stelleinheit 86 ansteuern und fremdkraftbestimmt Bremsdruck aufbauen. Es muss in diesen Fällen also nicht direkt in die hydraulische Rückfallebene geschaltet werden, in der der Fahrer einen deutlich anderen Pedalweg/Verzögerungsmoment-Zusammenhang wahrnimmt bzw. auch deutlich mehr Kraft zum Bremsen aufwenden muss.

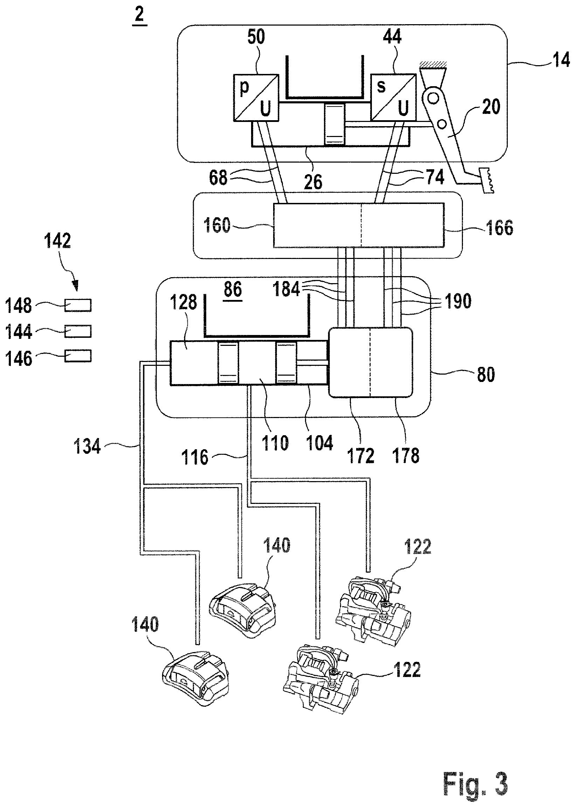

Die in FIG. 3 dargestellte Fremdkraftbremsanlage 2 unterscheidet sich von der in FIG. 2 gezeigten durch die Ausgestaltung der Stromversorgung 142. Diese weist nun zwei Pluspole 144, 148 auf. Die Stromversorgung 142 ist somit 2-kreisig ausgeführt in dem Sinne, dass jeder der beiden Steuer-und Regeleinheiten 160, 166 eine separate Energieversorgung aufweist, so dass bei Ausfall einer der Stromversorgungen wenigstens noch eine Steuer- und Regeleinheit die Stelleinheit 86 ansteuern kann.

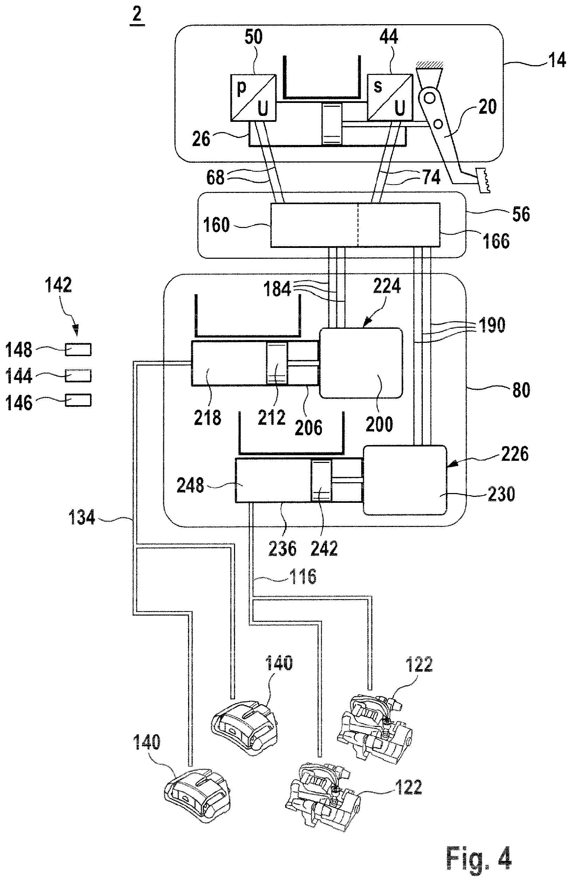

FIG. 4 zeigt eine Fremdkraftbremsanlage 2. Wie bei der Ausführung in FIG. 2 sind zwei Steuer- und Regeleinheiten 160, 166 vorgesehen. Daneben sind nun aber auch zwei unabhängige Stelleinheiten 224, 226 vorgesehen. Die Stelleinheit 224 umfasst einen Elektromotor 200, der über eine Getriebe/Spindel-Einheit in einem Hauptbremszylinder 206 einen Kolben 212 zum Druckaufbau in einer Kammer 218 und dem daran angeschlossenen Bremskreis 134 verschiebt. Die Stelleinheit 226 umfasst äquivalent einen Elektromotor 230, der in einem Hauptbremszylinder 236 einen Kolben 242 zum Druckaufbau in einer Kammer 248 und dem Bremskreis 116 verschiebt. Über Signalleitungen 184 steuert die Steuer-und Regeleinheit 160 die Stelleinheit 224, über Signalleitungen 190 die Steuer- und Regeleinheit 166 die Stelleinheit 226 an, in beiden Fällen jeweils insbesondere den entsprechenden Elektromotor 200, 230. Bei dieser Ausführung der Fremdkraftbremsanlage 2 ist also jeder der beiden Steuer-und Regeleinheiten eine Stelleinheit 224, 226 zugeordnet.

Auch hier ist wieder eine zweikreisige Energie- bzw. Stromversorgung 142 realisiert. Dabei sind die Steuer- und Regeleinheit 160 und die Stelleinheit 224 einem Energieversorgungskreis und die Steuer- und Regeleinheit 166 und die Stelleinheit 226 einem anderen Energieversorgungskreis zugeordnet. Fällt nun eine Steuer- und Regeleinheit 160, 166 aus, so kann die zugeordnete bzw. signalmäßig verbundene Stelleinheit 224, 226 nicht mehr angesteuert werden, wodurch jeweils der entsprechende Bremskreis 134, 116 ausfällt. Der jeweils andere Bremskreis 116, 134, der der noch funktionierenden und aktiven Steuer- und Regeleinheit 166, 160 zugeordnet ist kann dann aber noch im Fremdkraftbetrieb betätigt werden.

### Bezugszeichenliste

- 2: Fremdkraftbremsanlage
- 8: Betätigungseinheit
- 14: Kasten
- 20: Bremspedal
- 26: Simulator
- 32: Simulatorkolben
- 38: Druckraum
- 44: Wegsensor
- 50: Drucksensor
- 56: Kasten
- 62: Steuer- und Regeleinheit
- 68: Signalleitung
- 74: Signalleitung
- 80: Kasten
- 86: Stelleinheit
- 92: Signalleitung
- 98: Elektromotor
- 104: Tandemhauptbremszylinder
- 110: Kammer
- 116: Bremskreis
- 122: Hinterradbremse
- 128: Kammer
- 134: Bremskreis
- 140: Vorderradbremse
- 142: Stromversorgung
- 144: Plus-Pol
- 146: Erde
- 148: Plus-Pol
- 160: primäre Steuer- und Regeleinheit
- 166: sekundäre Steuer- und Regeleinheit
- 172: erster Teil
- 178: zweiter Teil
- 184: Signalleitung
- 190: Signalleitung
- 200: Elektromotor
- 206: Hauptbremszylinder
- 212: Kolben
- 218: Kammer
- 224: Stelleinheit
- 226: Stelleinheit
- 230: Elektromotor
- 236: Hauptbremszylinder
- 242: Kolben
- 248: Kammer

## Patentansprüche

1. Hydraulische Fremdkraftbremsanlage (2) mit einer Bremsbetätigungseinheit (8), mit wenigstens einem Sensor zur Fahrerbremswunscherfassung bei Betätigung der Bremsbetätigungseinheit (8) durch den Fahrer, mit wenigstens einer Stelleinheit (86) zur Einstellung und Einregelung einer Bremskraft, mit einer primären elektronischen Steuer- und Regeleinheit (160), die signaleingangsseitig mit wenigstens einem Sensor verbunden ist und in Abhängigkeit von dessen Signalen die Stelleinheit (86) bedarfsweise ansteuert, und mit wenigstens einer sekundären Steuer- und Regeleinheit (166), wobei die sekundäre Steuer- und Regeleinheit (166) signaleingangsseitig mit wenigstens einem Sensor verbunden ist und in Abhängigkeit von dessen Signalen die Stelleinheit (86) bedarfsweise ansteuert, **dadurch gekennzeichnet, dass** die Stelleinheit (86) einen Elektromotor (98) und einen Aktuator umfasst, wobei der Elektromotor (98) zweiteilig mit einer ersten und einer zweiten Komponente (172, 178) ausgeführt ist, wobei die erste Komponente (172) von der primären Steuer- und Regeleinheit (160) und die zweite Komponente (178) von der sekundären Steuer- und Regeleinheit (166) angesteuert wird.

2. Hydraulische Fremdkraftbremsanlage (2) nach Anspruch 1, **dadurch gekennzeichnet, dass** die jeweilige Steuer- und Regeleinheit (160, 166) eine separate und von der Energieversorgung der jeweils anderen Steuer- und Regeleinheiten (166, 160) unabhängige Energieversorgung aufweist.

3. Hydraulische Fremdkraftbremsanlage (2) nach Anspruch 1 oder 2, **dadurch gekennzeichnet, dass** zu einer vorgegebenen Sicherheitsanforderung, insbesondere ASIL D, die primäre und die sekundäre Steuer- und Regeleinheit (160, 166) derart konfiguriert sind, dass sie zusammen die vorgegebene Sicherheitsanforderung erfüllen, wobei jeder der Steuer- und Regeleinheiten (160, 166) für sich genommen einer niedrigen Sicherheitsanforderung, insbesondere ASIL B, genügt.

4. Hydraulische Fremdkraftbremsanlage (2) nach einem der Ansprüche 1 bis 3, **dadurch gekennzeichnet, dass** der Aktuator ein Getriebe und eine Spindeleinheit, welche eine rotatorische Bewegung der Motorachse in eine translatorische Bewegung eines Primärkolbens eines Tandemhauptbremszylinder (104) übersetzt, umfasst, wobei der Tandemhauptbremszylinder (104) zwei Kammern (110, 128) aufweist, wobei jede Kammer (110, 128) hydraulisch mit einem Bremskreis (116, 134) mit zwei Radbremsen (122, 140) verbunden ist.

5. Hydraulische Fremdkraftbremsanlage (2) nach einem der Ansprüche 1 bis 4, **dadurch gekennzeichnet, dass** der Elektromotor (98) ein elektronisch kommutierender BLDC-Motor ist.

6. Hydraulische Fremdkraftbremsanlage (2) nach einem der Ansprüche 1 bis 5, **dadurch gekennzeichnet, dass** ein redundant ausgeführter Wegsensor (44) und/oder ein redundant ausgeführter Drucksensor (50) vorgesehen sind.

7. Hydraulische Fremdkraftbremsanlage (2) nach einem der Ansprüche 1 bis 6, **dadurch gekennzeichnet, dass** die Betätigungseinheit (8) ein Bremspedal (20) und einen Simulator (26) umfasst.

## Claims

1. Hydraulic power brake system (2) with a brake operating unit (8), with at least one sensor for detecting a driver's braking demand when the brake operating unit (8) is operated by the driver, with at least one actuating unit (86) for setting and adjusting a brake force, with a primary electronic control and regulating unit (160), which is connected on the signal input side to at least one sensor and activates the actuating unit (86) on demand in dependence on signals of said sensor, and with at least one secondary control and regulating unit (166), wherein the secondary control and regulating unit (166) is connected on the signal input side to at least one sensor and activates the actuating unit (86) on demand in dependence on the signals of said sensor, **characterized in that** the actuating unit (86) comprises an electric motor (98) and an actuator, wherein the electric motor (98) is of a two-part configuration with a first and a second component (172, 178), wherein the first component (172) is activated by the primary control and regulating unit (160) and the second component (178) is activated by the secondary control and regulating units (166).

2. Hydraulic power brake system (2) according to Claim 1, **characterized in that** the respective control and regulating unit (160, 166) has a separate energy supply that is independent of the energy supply of the respectively other control and regulating units (166, 160).

3. Hydraulic power brake system (2) according to Claim 1 or 2, **characterized in that** the primary control and regulating unit (160) and the secondary control and regulating unit (166) are configured in compliance with a prescribed safety requirement, in particular ASIL D, in such a way that they together meet the prescribed safety requirement, each of the control and regulating units (160, 166) in itself conforming to a low safety requirement, in particular ASIL B.

4. Hydraulic power brake system (2) according to one of Claims 1 to 3, **characterized in that** the actuator comprises a gear mechanism and a spindle unit, which transforms a rotary movement of the motor spindle into a translatory movement of a primary piston of a tandem brake master cylinder (104), the tandem brake master cylinder (104) having two chambers (110, 128), each chamber (110, 128) being hydraulically connected to a brake circuit (116, 134) with two wheel brakes (122, 140).

5. Hydraulic power brake system (2) according one of Claims 1 to 4, **characterized in that** the electric motor (98) is an electronically commutating BLDC motor.

6. Hydraulic power brake system (2) according one of Claims 1 to 5, **characterized in that** a travel sensor (44) of a redundant configuration and/or a pressure sensor (50) of a redundant configuration is/are provided.

7. Hydraulic power brake system (2) according one of Claims 1 to 6, **characterized in that** the operating unit (8) comprises a brake pedal (20) and a simulator (26).

## Revendications

1. Système de freinage hydraulique actionné par une force extérieure (2), comprenant une unité d'actionnement de frein (8), comprenant au moins un capteur destiné à détecter un souhait de freinage du conducteur lors de l'actionnement de l'unité d'actionnement de frein (8) par le conducteur, comprenant au moins une unité de réglage (86) pour régler et ajuster une force de freinage, comprenant une unité de commande et de régulation électronique primaire (160) qui est reliée côté entrée de signaux à au moins un capteur et pilote l'unité de réglage (86) au besoin en fonction des signaux du capteur, et comprenant au moins une unité de commande et de régulation secondaire (166), l'unité de commande et de régulation secondaire (166) étant reliée côté entrée des signaux à au moins un capteur et pilotant l'unité de réglage (86) au besoin en fonction des signaux du capteur, **caractérisé en ce que** l'unité de réglage (86) comprend un moteur électrique (98) et un actionneur, le moteur électrique (98) étant réalisé en deux parties avec un premier et un deuxième composant (172, 178), le premier composant (172) étant piloté par l'unité de commande et de régulation primaire (160) et le deuxième composant (178) étant piloté par l'unité de commande et de régulation secondaire (166).

2. Système de freinage hydraulique actionné par une force extérieure (2) selon la revendication 1, **caractérisé en ce que** l'unité de commande et de régulation (160, 166) respective présente une alimentation en énergie séparée et indépendante de l'alimentation en énergie des autres unités de commande et de régulation (166, 160) respectivement.

3. Système de freinage hydraulique actionné par une force extérieure (2) selon la revendication 1 ou 2, **caractérisé en ce que** pour une norme de sécurité prédéfinie, en particulier ASIL D, les unités de commande et de régulation primaire et secondaire (160, 166) sont configurées de telle sorte qu'elles satisfont ensemble la norme de sécurité prédéfinie, chacune des unités de commande et de régulation (160, 166), considérée séparément, satisfaisant à une norme de sécurité inférieure, en particulier ASIL B.

4. Système de freinage hydraulique actionné par une force extérieure (2) selon l'une quelconque des revendications 1 à 3, **caractérisé en ce que** l'actionneur comprend un réducteur et une unité à vis qui convertit un mouvement rotatif de l'axe du moteur en un mouvement de translation d'un piston primaire d'un maître-cylindre tandem (104), le maître-cylindre tandem (104) présentant deux compartiments (110, 128), chaque compartiment (110, 128) étant relié de manière hydraulique à un circuit de frein (116, 134) comprenant deux freins sur roue (122, 140).

5. Système de freinage hydraulique actionné par une force extérieure (2) selon l'une quelconque des revendications 1 à 4, **caractérisé en ce que** le moteur électrique (98) est un moteur BLDC à commutation électronique.

6. Système de freinage hydraulique actionné par une force extérieure (2) selon l'une quelconque des revendications 1 à 5, **caractérisé en ce qu'**un capteur de déplacement (44) réalisé de manière redondante et/ou un capteur de pression (50) réalisé de manière redondante sont prévus.

7. Système de freinage hydraulique actionné par une force extérieure (2) selon l'une quelconque des revendications 1 à 6, **caractérisé en ce que** l'unité d'actionnement (8) comprend une pédale de frein (20) et un simulateur (26).
